# DEMANDE DE BREVET EUROPEEN

(11) **EP 0 581 684 A1**
(43) Date de publication de la demande: **02.02.1994**
(21) Numéro de dépôt: 93401974.6
(22) Date de dépôt: 29.07.1993
(51) Int. Cl.: F28F 9/18

(54) **Echangeur de chaleur à tubes brasés et procédé pour son assemblage**

(30) Priorité: 30.07.1992 FR 9209470
(71) Demandeur: VALEO THERMIQUE MOTEUR, 78320 Le Mesnil Saint-Denis (FR)
(72) Inventeur: Le Gauyer, Philippe, F-75019 Paris (FR)
(74) Mandataire: Gamonal, Didier

(57) **Abrégé**

L'invention concerne un échangeur de chaleur à tubes brasés ainsi qu'un procédé pour son assemblage.

L'échangeur de chaleur comprend un faisceau de tubes parallèles (26) et une plaque collectrice (10) munie de trous (22) dans chacun desquels sont introduites et brasées les extrémités respectives (24) de plusieurs tubes appartenant à un même groupe, chaque trou (22) présentant une section allongée adaptée à recevoir, de façon jointive, les extrémités (24) des tubes, la section allongée du trou possédant un grand axe dont la longueur (L) est inférieure à la somme des longueurs initiales des grands axes respectifs des sections des extrémités (24), avant introduction dans le trou (22).

Application aux échangeurs de chaleur pour véhicules automobiles.

## Description

L'invention concerne un échangeur de chaleur du type comprenant un faisceau de tubes parallèles présentant des extrémités respectives reçues et brasées dans une plaque collectrice munie de trous.

De tels échangeurs de chaleur sont utilisés notamment dans les véhicules automobiles à moteur à combustion interne pour former soit un radiateur de refroidissement du moteur, soit un radiateur de chauffage de l'habitacle. Dans l'une ou l'autre de ces deux applications, les tubes du faisceau sont parcourus par un fluide, généralement de l'eau additionnée d'un antigel, servant au refroidissement du moteur, tandis qu'un flux d'air balaie les tubes du faisceau.

Dans les échangeurs de chaleur connus de ce type, il est prévu habituellement autant de trous dans la plaque collectrice que de tubes dans le faisceau, pour que chaque extrémité de tube soit reçue et brasée individuellement dans un trou de la plaque collectrice.

Dans la Demande de Brevet français No 91 03411, au nom de la Demanderesse, on a proposé un échangeur de chaleur du type comprenant un faisceau de tubes parallèles et une plaque collectrice munie de trous dans chacun desquels sont introduites et brasées les extrémités respectives de plusieurs tubes adjacents appartenant à un même groupe, les extrémités des tubes ayant une section allongée possédant un grand axe.

Du fait que les extrémités respectives des tubes d'un groupe sont reçues dans un seul trou de la plaque collectrice, au lieu d'être reçues chacune individuellement dans un trou de cette plaque, l'entr'axe ou pas des tubes peut être amené à une valeur minimale.

On peut ainsi optimiser les performances thermiques de l'échangeur de chaleur pour des dimensions minimales de la plaque collectrice.

Toutefois, l'assemblage d'un tel échangeur de chaleur peut poser des difficultés pour obtenir une liaison étanche par brasure au niveau des parties respectives de deux extrémités de tubes qui sont reçues dans un même trou et qui sont mutuellement en contact.

En effet, dans le document précité, on prévoit des becs formés respectivement sur deux côtés opposés du trou de manière à combler l'espace formé entre les parties mutuellement en contact de deux extrémités de tubes adjacentes.

Mais, il est alors impossible de former un chanfrein s'étendant dans la région des becs et facilitant l'introduction des tubes.

Pour remédier à cet inconvénient, on a envisagé de réduire la taille des becs de façon à faire apparaître un jeu entre ceux-ci et les extrémités de tubes, ce jeu étant réduit jusqu'à une valeur compatible avec un brasage correct.

Cette solution n'est pas satisfaisante car il est nécessaire d'allonger la section du tube pour obtenir une déformation propre à réduire le jeu existant. Or, cette déformation par allongement peut provoquer une rupture du matériau, c'est-à-dire du métal, qui constitue le tube.

C'est en conséquence l'un des buts de l'invention de procurer un échangeur de chaleur du type précité qui évite les inconvénients mentionnés ci-dessus.

C'est encore un but de l'invention de procurer un procédé permettant un assemblage aisé d'un tel échangeur de chaleur.

C'est encore un but de l'invention de procurer un tel procédé d'assemblage qui peut être mis en oeuvre à l'échelle industrielle.

L'invention propose à cet effet un échangeur de chaleur du type mentionné précédemment, dans lequel chaque trou présente une section allongée adaptée à recevoir, de façon jointive, les extrémités des tubes du groupe de sorte que les grands axes de leur section soient alignés, et dans lequel la section allongée du trou possède un grand axe dont la longueur est inférieure à la somme des longueurs initiales des grands axes respectifs des sections d'extrémités des tubes avant introduction dans le trou.

Du fait que la longueur du grand axe du trou est inférieure à la somme des longueurs initiales des grands axes des extrémités de tubes, l'introduction des extrémités des tubes dans le trou provoque une diminution ou contraction des grands axes respectifs des sections d'extrémités des tubes.

Ceci permet de réduire l'allongement qui peut être imposé ultérieurement aux extrémités de tubes pour permettre leur conformation, avant l'opération de brasage.

Dans le cas où chaque trou est bordé par un collet, l'invention permet de former un chanfrein sur toute la périphérie du trou, facilitant ainsi l'introduction des extrémités des tubes dans ce trou.

L'invention s'applique tout particulièrement à un échangeur de chaleur dans lequel la section oblongue du trou est délimitée par deux côtés droits parallèles et deux côtés incurvés, par exemple semi-circulaires, et dans lequel les côtés droits du trou comportent des becs en vis-à-vis. L'invention prévoit alors de former des becs de taille insuffisante pour combler l'espace délimité entre deux extrémités de tubes adjacentes, si ces dernières n'étaient pas déformées.

L'invention s'applique tout particulièrement à un échangeur de chaleur, dans lequel les tubes d'un même groupe appartiennent à des rangées différentes d'un faisceau, ce faisceau pouvant être par exemple du type bi-rang ou tri-rang.

Sous un autre aspect, l'invention concerne un procédé d'assemblage d'un échangeur de chaleur du type mentionné précédemment, ce procédé comprenant essentiellement les opérations suivantes :
- prévoir une plaque collectrice munie de trous ayant une section allongée propre à recevoir, de façon jointive, les extrémités des tubes du groupe de sorte que les grands axes de ces sections soient alignés, la section allongée du trou possédant un grand axe dont la longueur est inférieure à la somme des longueurs initiales des grands axes respectifs des sections d'extrémités des tubes avant introduction dans le trou,
- introduire en force dans le trou, et de façon simultanée, les extrémités des tubes du groupe, provoquant ainsi une déformation des parties respectives des extrémités de tubes mutuellement en contact, et
- braser les extrémités de tubes reçues dans les trous.

Avantageusement, ce procédé comporte une opération subséquente consistant à compléter la déformation des parties en contact de manière à les aplatir dans une direction sensiblement perpendiculaire à celle du grand axe de la section allongée du trou.

Cet aplatissement provoque un allongement limité du matériau constitutif du tube, et donc sans risque de rupture.

Selon une autre caractéristique de l'invention, on forme les trous de la plaque collectrice par poinçonnage en ménageant un collet qui entoure chaque trou et qui présente un chanfrein propre à faciliter l'introduction des extrémités des tubes dans le trou.

Dans le cas où la section oblongue du trou comporte des becs en vis-à-vis, on réalise ces becs de telle sorte qu'ils possèdent une taille insuffisante pour compléter l'espace délimité entre les parties en contact des extrémités adjacentes, si celles-ci n'étaient pas déformées.

Dans la description qui suit, faite à titre d'exemple, on se réfère au dessin annexé, sur lequel :
- la figure 1 est une vue partielle en coupe transversale d'un échangeur de chaleur selon l'invention après assemblage par brasage ;
- la figure 2 est une vue partielle de dessus de la plaque collectrice de l'échangeur de chaleur de la figure 1, faisant apparaître la forme de la section d'un trou ;
- la figure 3 est une vue montrant la section d'extrémité d'un tube, avant déformation ;
- la figure 4 est une vue partielle en coupe, à échelle agrandie de l'échangeur de la figure 1 avant introduction des extrémités de tubes dans le trou ;
- la figure 5 est une vue de dessus correspondant à la figure 4, également avant assemblage ; et
- la figure 6 est une vue de dessus analogue à la figure 5 montrant la configuration des extrémités des tubes après introduction dans le trou.

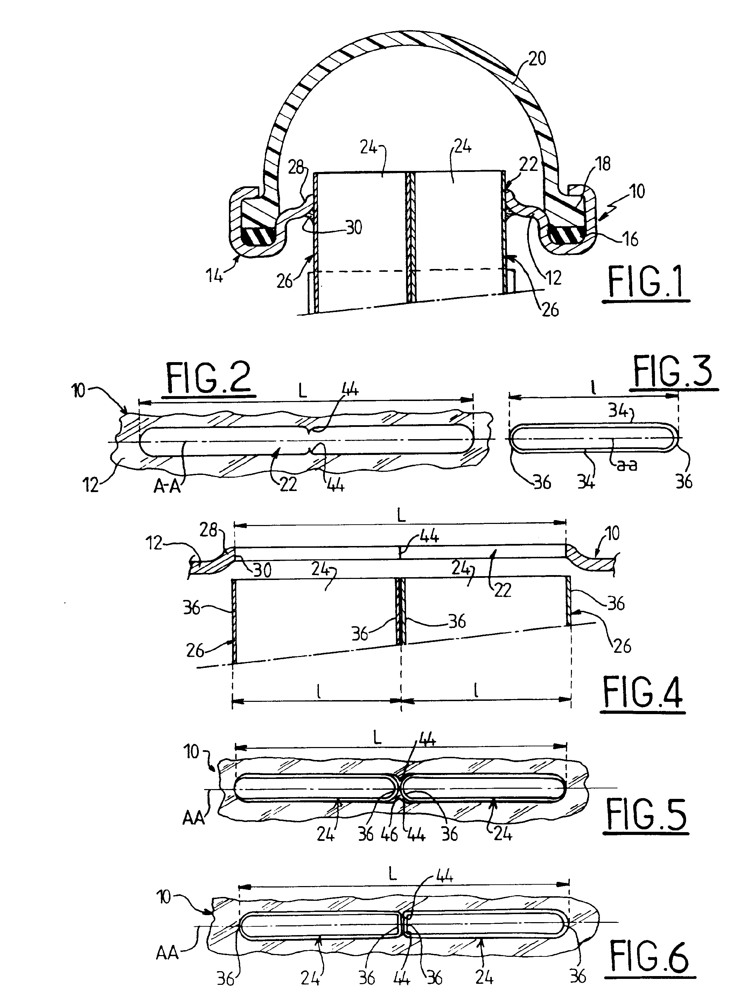

L'échangeur de chaleur représenté à la figure 1 comprend une plaque collectrice 10 ayant une âme métallique 12 de forme générale rectangulaire prolongée, surtout son pourtour, par un bord plié 14. Ce dernier délimite une gorge périphérique contenant un joint compressible 16. La gorge ménagée par le bord 14 reçoit un bourrelet périphérique 18 faisant partie d'une paroi de boîte à eau 20. Le bord 14 est ensuite rabattu sur le bourrelet 18 pour assurer la compression du joint 16.

Au travers de l'âme 12 de la plaque collectrice 10 sont ménagés une multiplicité de trous 22 dans chacun desquels sont introduites et brasées les extrémités respectives 24 de deux tubes 26 de section oblongue. Les tubes sont en métal recouvert d'un alliage de brasure.

Chacun des trous 22 possède une section allongée dont la plus grande dimension s'étend perpendiculairement aux deux grands côtés de la plaque collectrice. Chacun des trous 22 est entouré par un collet 28 obtenu par relevage de l'âme 12 et destiné d'une part à faciliter l'introduction des extrémités 24 dans le trou 22 et d'autre part à faciliter le brasage des extrémités 24. Cette opération de brasage permet la formation d'un joint de brasage 30 (figure 1) résultant de la fusion d'un alliage métallique recouvrant la paroi des tubes 26 et des plaques collectrices 10.

Entre les groupes de tubes adjacents sont disposées des ailettes 32 en forme de sinusoïde (figure 1).

La structure générale de l'échangeur de chaleur telle qu'elle vient d'être décrite jusqu'à maintenant en référence à la figure 1 est décrite dans la Demande de Brevet français 91 03411 non publiée.

Chaque trou 22 présente une section allongée (figure 2) propre à recevoir, de façon jointive, les extrémités respectives 24 de deux tubes 26, dont la section apparaît sur la figure 3.

Chacun des tubes 26 possède une paroi métallique définissant une section oblongue délimitée par deux côtés droits parallèles 34 et deux côtés incurvés 36, dans l'exemple semi-circulaires (figure 3). La section oblongue de chaque tube possède un grand axe aa ayant initialement, c'est-à-dire avant assemblage de l'échangeur de chaleur, une longueur 1 (figure 3).

Chaque trou 22 possède une section allongée délimitée par deux côtés droits parallèles 38 et deux côtés incurvés 40, dans l'exemple semi-circulaires. La section allongée du trou 22 possède un grand axe AA s'étendant sur une longueur L.

La section allongée du tube est adaptée pour recevoir, de façon jointive, les extrémités 24 de deux tubes 26 de sorte que les grands axes aa des sections des tubes soient alignés entre eux et avec le grand axe AA. Le grand axe AA s'étend sur une longueur L qui est inférieure à la somme des longueurs initiales, c'est-à-dire 1 + 1, des grands axes aa des sections d'extrémités des tubes.

Comme on le voit mieux sur la figure 4, le collet 28 de chaque trou 22, obtenu par poinçonnage, forme un chanfrein 42 qui s'étend sur toute la périphérie interne du trou 22 pour faciliter notamment l'introduction des tubes pour l'assemblage de l'échangeur de chaleur.

Les côtés droits 38 du trou 22 comportent des becs en vis-à-vis 44 (figures 2 et 4) ayant une taille insuffisante pour combler l'espace délimité entre deux extrémités de tubes adjacentes, c'est-à-dire entre les côtés semi-circulaires 36 de deux extrémités de tubes 24 qui sont en contact entre eux. On forme ainsi un espace non comblé 46 ayant, en section droite, sensiblement la forme d'un X comme montré à la figure 5.

Dans l'exemple de réalisation, la différence entre la somme des longueurs initiales des grands axes aa (c'est-à-dire 2 x 1) et la longueur du grand axe AA (c'est-à-dire L) est faible. Dans l'exemple, cette différence est sensiblement égale au double de l'épaisseur de paroi d'un tube 26.

Pour assurer l'assemblage de l'échangeur de chaleur de l'invention, on présente tout d'abord, en face de chaque trou 22, les extrémités respectives 24 de deux tubes 26, ces extrémités étant disposées de façon jointive avec leurs grands axes respectifs aa disposés alignés (figure 4). Les extrémités 24 des tubes sont ensuite introduites en force, axialement et simultanément, dans les trous 22 ce qui provoque à chaque fois une déformation des tubes du fait que la longueur (2 x 1) de deux sections de tubes alignés est supérieure à la longueur (L) du grand axe du trou 22.

Lors de l'introduction des trous, le chanfrein 30 du collet 28 facilite la déformation de la paroi du tube dans la région des deux côtés semi-circulaires 36 en contact entre eux.

Lors de l'introduction des extrémités 24, les parties respectives en contact (côtés semi-circulaires 36) se déforment pour passer de la forme représentée à la figure 5 à la forme représentée à la figure 6 dans laquelle les deux côtés 36, initialement de forme semi-circulaire, s'aplatissent progressivement en comblant ainsi l'espace ou jeu 46. Cet aplatissement s'effectue dans une direction sensiblement perpendiculaire à celle du grand axe AAde la section allongée du trou 22.

Généralement, il est préférable de faire appel à une opération subséquente consistant à compléter la déformation des côtés 36 en contact pour obtenir un aplatissement correct dans la direction déjà mentionnée. Cette opération subséquente se fait par l'utilisation d'un poinçon (non représenté) introduit à l'intérieur de l'extrémité 24 de chaque tube, ce qui provoque un léger allongement de la section du tube, sans toutefois risquer de rompre la matière du tube.

Après cette opération, les côtés 36 en contact sont plats et se raccordent aux côtés 34 des deux sections 24 par des arrondis de faible rayon de courbure qui épousent la forme des becs 44, si bien qu'il n'existe aucun jeu entre les deux extrémités de tubes et le collet 28 du trou qui les reçoit.

On peut alors procéder à l'opération de brasage, et cela d'une manière en soi connue.

Du fait que le grand axe AA de chaque trou 22 a une longueur inférieure à la somme des longueurs initiales des grands axes des sections des tubes, on réduit, comme indiqué précédemment l'allongement imposé aux tubes pendant l'opération subséquente de conformation. L'introduction des extrémités des tubes reste possible grâce au chanfrein 30 formé par le collet et grâce à la résistance des rayons des tubes au pliage.

L'invention n'est pas limitée à un échangeur de chaleur du type représenté à la figure 1. Les tubes du faisceau peuvent être répartis en groupe de plus de deux tubes, ces tubes appartenant soit à des rangées différentes du faisceau, soit à une même rangée de tubes.

L'invention trouve une application particulière à la réalisation d'échangeurs de chaleur pour véhicules automobiles.

## Revendications

1. Echangeur de chaleur du type comprenant un faisceau de tubes parallèles (26) et une plaque collectrice (10) munie de trous (22) dans chacun desquels sont introduites et brasées les extrémités respectives (24) de plusieurs tubes adjacents appartenant à un même groupe, les extrémités (24) des tubes ayant une section oblongue possédant un grand axe (a), caractérisé en ce que le trou (22) présente une section allongée propre à recevoir, de façon jointive, les extrémités (24) des tubes du groupe, de sorte que les grands axes (aa) de leur section soient alignés et en ce que la section allongée du trou (22) possède un grand axe (AA) dont la longueur (L) est inférieure à la somme des longueurs initiales des grands axes respectifs (aa) des sections d'extrémités des tubes avant introduction dans le trou.

2. Echangeur de chaleur selon la revendication 1, dans lequel chaque trou (22) est bordé par un collet (28), caractérisé en ce que ce collet comporte un chanfrein (30) facilitant l'introduction des extrémités (24) des tubes dans le trou (22).

3. Echangeur de chaleur selon l'une des revendications 1 et 2, dans lequel la section oblongue du trou (22) est délimitée par deux côtés droits parallèles (38) et deux côtés incurvés (40) et dans lequel les côtés droits (38) comportent des becs (44) en vis-à-vis, caractérisé en ce que les becs (44) ont une taille insuffisante pour combler l'espace (46) délimité entre deux extrémités de tubes adjacents, si ces dernières n'étaient pas déformées.

4. Echangeur de chaleur selon l'une des revendications 1 à 3, caractérisé en ce que les tubes (26) d'un même groupe appartiennent à des rangées différentes d'un faisceau.

5. Echangeur de chaleur selon l'une des revendications 1 à 4, caractérisé en ce que chaque groupe comprend deux tubes (26).

6. Procédé d'assemblage d'un échangeur de chaleur du type comprenant un faisceau de tubes parallèles (26) et une plaque collectrice (10) munie de trous (22) dans chacun desquels sont introduites et brasées les extrémités respectives (24) de plusieurs tubes (26) adjacents appartenant à un même groupe, les extrémités (24) des tubes ayant une section allongée possédant un grand axe (aa), caractérisé en ce qu'il comprend les opérations suivantes :
- prévoir une plaque collectrice (10) munie de trous (22) ayant une section allongée propre à recevoir, de façon jointive, les extrémités (24) des tubes du groupe, de sorte que les grands axes (aa) de ces sections soient alignés, la section allongée de chaque trou possédant un grand axe (AA) dont la longueur (L) est inférieure à la somme des longueurs initiales des grands axes respectifs (aa) des sections d'extrémités des tubes avant introduction dans le trou ;
- introduire en force dans le trou, et de façon simultanée, les extrémités (24) des tubes du groupe, ce qui provoque une déformation des parties respectives (36) des extrémités de tubes mutuellement en contact.

7. Procédé selon la revendication 6, caractérisé en ce qu'il comporte en outre une opération subséquente consistant à compléter la déformation desdites parties en contact (36) de manière à les aplatir dans une direction sensiblement perpendiculaire à celle du grand axe (AA) de la section allongée du trou.

8. Procédé selon l'une des revendications 6 et 7, caractérisé en ce que l'on forme les trous (22), de la plaque collectrice (10) par poinçonnage en ménageant un collet (28) qui entoure chaque trou et qui présente un chanfrein (30) propre à faciliter l'introduction des extrémités (24) des tubes dans le trou.

9. Procédé selon l'une des revendications 7 et 8, dans lequel la section oblongue du trou (22) est délimitée par deux côtés droits (38) et deux côtés incurvés (40), et dans lequel les côtés droits (38) comportent des becs (44) en vis-à-vis, caractérisé en ce que les becs (44) ont une taille insuffisante pour combler l'espace (46) délimité entre les parties en contact (36) des extrémités adjacentes (24), si ces dernières n'étaient pas déformées.
